# EUROPÄISCHE PATENTSCHRIFT

(11) **EP 3 137 952 B1**
(45) Veröffentlichungstag und Bekanntmachung des Hinweises auf die Patenterteilung: **07.10.2020**
(21) Anmeldenummer: 15719192.5
(22) Anmeldetag: 23.04.2015
(51) Int. Cl.: G05B 19/042, G05F 1/66, G06F 1/26

(54) **PARAMETRISIERBARES ENERGIEVERSORGUNGSGERÄT**
PARAMETERIZABLE ENERGY SUPPLY DEVICE
APPAREIL D'ALIMENTATION EN ÉNERGIE PARAMÉTRABLE

(30) Priorität: 28.04.2014 DE 102014105913
(43) Veröffentlichungstag der Anmeldung: 08.03.2017
(73) Patentinhaber: Phoenix Contact GmbH & Co. KG, 32825 Blomberg (DE)
(72) Erfinder: ZEUCH, Jochen, 32825 Blomberg (DE); HENKEL, Hartmut, 32825 Blomberg (DE); SCHWEER, Patrick, 31785 Hameln (DE)
(74) Vertreter: Patentship Patentanwaltsgesellschaft mbH
(86) Internationale Anmeldenummer: PCT/EP2015/058801
(87) Internationale Veröffentlichungsnummer: WO 2015/165796

(56) Entgegenhaltungen:
- WO-A1-2006/056532
- WO-A1-2012/145402
- DE-A1-102012 203 585
- "Introduction to NFC", , 19. April 2011 (2011-04-19), XP055016470, Gefunden im Internet: URL:http://www.adafruit.com/datasheets/Int roduction_to_NFC_v1_0_en.pdf [gefunden am 2012-01-13]

## Beschreibung

Die vorliegende Erfindung betrifft die Parametrierung eines Energieversorgungsgerätes mit Umverpackung

Ein parametrisierbares Energieversorgungsgerät, wie ein universelles Spannungsversorgungsgerät oder ein universelles Stromversorgungsgerät, kann eine Vielzahl von einstellbaren Betriebsparametern umfassen. Beispielsweise kann eine elektrische Ausgangsspannung oder ein elektrischer Ausgangsstrom des parametrisierbaren Energieversorgungsgerätes eingestellt werden. Die Betriebsparameter können häufig mittels Bedienelementen, wie Tastern oder Drehknöpfen, oder über eine kontaktbehaftete oder drahtgebundene Kommunikationsschnittstelle, wie eine serielle Schnittstelle oder eine Schnittstelle nach dem Standard Power Management Bus (PMBus), eingestellt werden.

Die Druckschrift WO 2012/145402 A1 offenbart eine als Energieversorgungsgerät ausgebildete Leistungsverteilungseinheit.

Die WO 2006/056532 A1 offenbart eine Automatisierungskomponente über Nahbereichskommunikation.

In einem im Internet veröffentlichten Artikel vom 19. April 2011 mit dem Titel "Introduction to NFC",http://www.adafruit.com/datasheets/Introduction_to_NFC_v1_0_en.pdf, werden die technischen Grundlagen zur Nahfeldkommunikation NFC erläutert.

Zur Parametrierung eines parametrisierbaren Energieversorgungsgerätes über eine kontaktbehaftete Kommunikationsschnittstelle kann ein Kommunikationsgerät, beispielsweise ein Computer, verwendet werden. Das parametrisierbare Energieversorgungsgerät und das Kommunikationsgerät können hierbei auf unterschiedlichen elektrischen Potentialen liegen. Da das parametrisierbare Energieversorgungsgerät und das Kommunikationsgerät nicht galvanisch getrennt sind, können elektrische Ausgleichsströme zwischen dem parametrisierbaren Energieversorgungsgerät und dem Kommunikationsgerät fließen. Ferner sind zum Parametrieren einer Mehrzahl von parametrisierbaren Energieversorgungsgeräten mit einem Kommunikationsgerät die jeweiligen kontaktbehafteten Kommunikationsschnittstellen aufwändig galvanisch zu trennen, insbesondere wenn die Mehrzahl der parametrisierbaren Energieversorgungsgeräte in Reihe geschaltet ist.

Es ist die der Erfindung zugrundeliegende Aufgabe, ein effizientes Konzept zur galvanisch getrennten Parametrierung eines parametrisierbaren Energieversorgungsgerätes anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein parametrisierbares Energieversorgungsgerät gelöst, mit: einer drahtlosen Kommunikationsschnittstelle zum Empfangen von Parametrisierungsdaten zur Parametrierung des parametrisierbaren Energieversorgungsgerätes über ein Kommunikationsnetzwerk; und einem Prozessor, welcher ausgebildet ist, zumindest einen Betriebsparameter des parametrisierbaren Energieversorgungsgerätes auf der Basis der empfangenen Parametrisierungsdaten einzustellen. Dadurch wir der Vorteil erreicht, dass ein parametrisierbares Energieversorgungsgerät bereitgestellt werden kann, welches von einem Kommunikationsgerät zur Parametrierung des Energieversorgungsgerätes galvanisch getrennt sein kann.

Das parametrisierbares Energieversorgungsgerät kann ein Spannungsversorgungsgerät oder ein Stromversorgungsgerät sein, welches zumindest einen einstellbaren Betriebsparameter aufweist. Der Betriebsparameter kann ein Sollwert für eine elektrische Ausgangsspannung oder einen elektrischen Ausgangsstrom des parametrisierbaren Energieversorgungsgerätes sein. Beispielsweise umfasst das parametrisierbare Energieversorgungsgerät ein elektronisch einstellbares Potentiometer zum Einstellen der elektrischen Ausgangsspannung oder des elektrischen Ausgangsstromes des parametrisierbaren Energieversorgungsgerätes. Ferner ist der Betriebsparameter einer elektrischen Ausgangskennliniencharakteristik des parametrisierbaren Energieversorgungsgerätes oder einem Überlastverhalten des parametrisierbaren Energieversorgungsgerätes zugeordnet. Das parametrisierbare Energieversorgungsgerät umfasst ferner einen Signaleingang, so kann der Betriebsparameter ein Parameter zur Auswertung der über den Signaleingang empfangenen Signale sein. Der Signaleingang ist zum Ferneinschalten des parametrisierbaren Energieversorgungsgerätes ausgebildet, sodass der Betriebsparameter ein Schwellwert für eine elektrische Spannung des Eingangssignals sein kann, wobei das parametrisierbare Energieversorgungsgerät bei einem Überschreiten des Schwellwerts durch die elektrische Spannung des Eingangssignals aktiviert wird und/oder bei einem Unterschreiten des Schwellwertes durch die elektrische Spannung des Eingangssignals deaktiviert wird.

Die Parametrisierungsdaten umfassen einen Betriebsparameter und/oder eine Information zur Auswahl eines Betriebsmodus oder eines Betriebsparameters. Das parametrisierbare Energieversorgungsgerät weist einen ersten Betriebsmodus mit vorbestimmten ersten Betriebsparametern und einen zweiten Betriebsmodus mit vorbestimmten zweiten Betriebsparametern auf, wobei der jeweilige Betriebsmodus auf der Basis der Information eingestellt wird.

Der Prozessor ist ferner ausgebildet sein, die empfangenen Parametrisierungsdaten und/oder den Betriebsparameter auf Gültigkeit zu überprüfen. Beispielsweise kann der Betriebsparameter auf Unterschreiten oder Überschreiten eines vorbestimmten Schwellwertes überprüft werden. Ferner können die Parametrisierungsdaten und/oder der Betriebsparameter mittels einer zyklischen Redundanzprüfung, beispielsweise nach dem Standard Cyclic Redundancy Check 8 (CRC-8), auf Gültigkeit überprüft werden.

Die drahtlose Kommunikationsschnittstelle kann eine Radiofrequenzidentifikationsschnittstelle zur Kommunikation mittels Radio-Frequency-Identification (RFID), beispielsweise nach dem Standard ISO/IEC 14443 oder ISO/IEC 18000-3, sein. Ferner kann die drahtlose Kommunikationsschnittstelle eine Nahfeldkommunikationsschnittstelle zur Kommunikation mittels Near-Field-Communication (NFC), beispielsweise nach dem Standard ISO/IEC 14443 oder ISO/IEC 18092, sein. Die drahtlose Kommunikationsschnittstelle kann ferner zur Kommunikation nach dem Standard Bluetooth, ZigBee oder Wireless Local Area Network (W-LAN) ausgebildet sein.

Das Kommunikationsnetzwerk kann ein Funknetzwerk, beispielsweise ein Nahfeldkommunikationsnetzwerk, ein Telefonnetzwerk, beispielsweise ein Mobilfunknetzwerk, ein Computernetzwerk, beispielsweise ein Wireless Local Area Network, und/oder das Internet sein.

In einer vorteilhaften Ausführungsform des parametrisierbaren Energieversorgungsgerätes ist das parametrisierbare Energieversorgungsgerät mit einem Speicher zum Speichern der empfangenen Parametrisierungsdaten ausgebildet, wobei der Prozessor ausgebildet ist, die Parametrisierungsdaten aus dem Speicher auszulesen, und den Betriebsparameter des parametrisierbaren Energieversorgungsgerätes auf der Basis der ausgelesenen Parametrisierungsdaten einzustellen. Dadurch wird der Vorteil erreicht, dass die Einstellung des Betriebsparameters dauerhaft gespeichert werden kann.

Der Speicher kann einen elektrisch löschbaren programmierbaren Nur-Lese-Speicher, beispielsweise einen Electrically-Erasable-Programmable-Read-Only-Memory (EEPROM) Speicher, umfassen. Ferner kann der Prozessor ausgebildet sein, die Parametrisierungsdaten bei einer Aktivierung des parametrisierbaren Energieversorgungsgerätes aus dem Speicher auszulesen.

In einer weiteren vorteilhaften Ausführungsform des parametrisierbaren Energieversorgungsgerätes ist die drahtlose Kommunikationsschnittstelle ausgebildet, die Parametrisierungsdaten über das Kommunikationsnetzwerk von einem Kommunikationsgerät drahtlos zu empfangen. Dadurch wird der Vorteil erreicht, dass mittels des Kommunikationsgeräts eine Mehrzahl von parametrisierbaren Energieversorgungsgeräten effizient parametriert werden können.

Das Kommunikationsgerät kann ein Computer, ein Smartphone oder ein Handgerät sein. Ferner kann das Kommunikationsgerät ein mobiles Kommunikationsgerät sein.

In einer weiteren vorteilhaften Ausführungsform des parametrisierbaren Energieversorgungsgerätes ist die drahtlose Kommunikationsschnittstelle ferner zum Aussenden des Betriebsparameters über ein Kommunikationsnetzwerk an ein Kommunikationsgerät ausgebildet. Dadurch wird der Vorteil erreicht, dass eine bidirektionale Kommunikation zwischen dem parametrisierbaren Energieversorgungsgerät und dem Kommunikationsgerät durchgeführt werden kann.

Das erfindungsgemässe parametrisierbare Energieversorgungsgerät mit einer Umverpackung wird über die drahtlose Kommunikationsschnittstelle drahtlos mit elektrischer Energie versorgt. Dadurch wird der Vorteil erreicht, dass das parametrisierbare Energieversorgungsgerät im deaktivierten Zustand parametriert werden kann.

Das parametrisierbare Energieversorgungsgerät wird ferner in einer Umverpackung parametriert.

In einer weiteren vorteilhaften Ausführungsform des parametrisierbaren Energieversorgungsgerätes umfasst die drahtlose Kommunikationsschnittstelle eine Nahfeldkommunikationsschnittstelle. Dadurch wird der Vorteil erreicht, dass die Parametrisierungsdaten und die elektrische Energie effizient empfangen werden können.

Die Nahfeldkommunikationsschnittstelle kann zur Kommunikation mittels Near-Field-Communication (NFC), beispielsweise nach dem Standard ISO/IEC 14443 oder ISO/IEC 18092, ausgebildet sein.

In einer weiteren vorteilhaften Ausführungsform des parametrisierbaren Energieversorgungsgerätes ist die drahtlose Kommunikationsschnittstelle innerhalb eines Gehäuses des parametrisierbaren Energieversorgungsgerätes oder in einer Gehäusewand eines Gehäuses des parametrisierbaren Energieversorgungsgerätes angeordnet. Dadurch wird der Vorteil erreicht, dass die drahtlose Kommunikationsschnittstelle platzsparend in das parametrisierbare Energieversorgungsgerät integriert werden kann.

In einer weiteren vorteilhaften Ausführungsform des parametrisierbaren Energieversorgungsgerätes umfasst die drahtlose Kommunikationsschnittstelle eine Antenne, welche innerhalb eines Gehäuses des parametrisierbaren Energieversorgungsgerätes angeordnet ist oder in einer Gehäusewand eines Gehäuses des parametrisierbaren Energieversorgungsgerätes integriert ist. Dadurch wird der Vorteil erreicht, dass das parametrisierbare Energieversorgungsgerät eine besonders kompakte Bauform aufweisen kann.

Die Antenne kann durch Leiterbahnen auf einer Platine oder einer Leiterplatte gebildet sein. Ferner kann das Gehäuse des parametrisierbaren Energieversorgungsgerätes ein Kunststoffgehäuse sein oder ein für elektromagnetische Signale durchlässiges Gehäuseelement umfassen.

In einer weiteren vorteilhaften Ausführungsform des parametrisierbaren Energieversorgungsgerätes ist oder umfasst der Betriebsparameter eine elektrische Ausgangsspannung und/oder einen elektrischen Ausgangsstrom und/oder eine Frequenz der elektrischen Ausgangsspannung und/oder eine Frequenz des elektrischen Ausgangsstroms des parametrisierbaren Energieversorgungsgerätes. Dadurch wird der Vorteil erreicht, dass das elektrische Ausgangssignal des parametrisierbaren Energieversorgungsgerätes parametriert werden kann.

In einer weiteren vorteilhaften Ausführungsform des parametrisierbaren Energieversorgungsgerätes ist das parametrisierbare Energieversorgungsgerät mit einer Anzeigeeinrichtung zum Anzeigen des Betriebsparameters ausgebildet. Dadurch wird der Vorteil erreicht, dass der mittels der Anzeigeeinrichtung angezeigte Betriebsparameter des parametrisierbaren Energieversorgungsgerätes eingestellt werden kann.

Die Anzeigeeinrichtung kann eine lichtemittierende Diode (LED) oder eine Flüssigkristallanzeige umfassen. Beispielsweise wird eingestellt, dass die

Flüssigkristallanzeige entweder den Sollwert für die elektrische Ausgangsspannung des parametrisierbaren Energieversorgungsgerätes oder den Sollwert für den elektrischen Ausgangsstrom des parametrisierbaren Energieversorgungsgerätes anzeigt.

In einer weiteren vorteilhaften Ausführungsform des parametrisierbaren Energieversorgungsgerätes ist das parametrisierbare Energieversorgungsgerät mit einer kontaktbehafteten Kommunikationsschnittstelle zum Aussenden des Betriebsparameters über ein weiteres Kommunikationsnetzwerk ausgebildet. Dadurch wird der Vorteil erreicht, dass der Betriebsparameter an ein Gerät zur Überwachung des parametrisierbaren Energieversorgungsgerätes übermittelt werden kann.

Die kontaktbehaftete Schnittstelle kann eine serielle Schnittstelle oder eine Schnittstelle nach dem Standard Power Management Bus (PMBus) sein.

Das weitere Kommunikationsnetzwerk kann ein drahtgebundenes Netzwerk, ein Telefonnetzwerk, ein Computernetzwerk, beispielsweise ein Local Area Network (LAN), und/oder das Internet sein.

Gemäß einem zweiten Aspekt wird ein Kommunikationsgerät zur Parametrierung eines parametrisierbaren Energieversorgungsgerätes über ein Nahfeldkommunikationsnetzwerk beschrieben mit: einer Benutzerschnittstelle zum Festlegen von Parametrisierungsdaten zur Parametrierung des parametrisierbaren Energieversorgungsgerätes; und einer Nahfeldkommunikationsschnittstelle zum Aussenden der festgelegten Parametrisierungsdaten an das parametrisierbare Energieversorgungsgerät über das Nahfeldkommunikationsnetzwerk. Dadurch wir der Vorteil erreicht, dass ein Kommunikationsgerät zur Parametrierung des parametrisierbaren Energieversorgungsgerätes bereitgestellt werden kann, welches von dem parametrisierbaren Energieversorgungsgerät galvanisch getrennt sein kann.

Das Kommunikationsgerät kann ein Computer, ein Smartphone oder ein Handgerät sein. Ferner kann das Kommunikationsgerät ein mobiles Kommunikationsgerät sein. Die Benutzerschnittstelle kann eine Tastatur, eine Anzeigeeinrichtung und/oder einen Touchscreen umfassen.

In einer weiteren vorteilhaften Ausführungsform des Kommunikationsgerätes ist die Nahfeldkommunikationsschnittstelle des Kommunikationsgerätes ferner zum Empfangen eines Betriebsparameters des parametrisierbaren Energieversorgungsgerätes über das Nahfeldkommunikationsnetzwerk ausgebildet. Dadurch wird der Vorteil erreicht, dass eine bidirektionale Kommunikation zwischen dem Kommunikationsgerät und dem parametrisierbaren Energieversorgungsgerät durchgeführt werden kann.

Gemäß einem dritten Aspekt wird ein Energieversorgungssystem beschrieben mit: einem parametrisierbaren Energieversorgungsgerät; und einem Kommunikationsgerät zur Parametrierung des parametrisierbaren Energieversorgungsgerätes über ein Nahfeldkommunikationsnetzwerk. Dadurch wird der Vorteil erreicht, dass das parametrisierbare Energieversorgungsgerät und das Kommunikationsgerät galvanisch getrennt sein können.

Gemäß einem vierten Aspekt der Erfindung wird die Aufgabe durch ein Verfahren zum Parametrieren eines parametrisierbaren Energieversorgungsgerätes gelöst, mit: drahtlosem Übertragen von Parametrisierungsdaten an das parametrisierbare Energieversorgungsgerät über ein Kommunikationsnetzwerk; und Einstellen zumindest eines Betriebsparameters des parametrisierbaren Energieversorgungsgerätes auf der Basis der empfangenen Parametrisierungsdaten in dem parametrisierbaren Energieversorgungsgerät. Dadurch wird der Vorteil erreicht, dass ein effizientes Verfahren zum Parametrieren eines parametrisierbaren Energieversorgungsgerätes angegeben wird.
Die Parametrisierungsdaten können von dem Kommunikationsgerät zu dem parametrisierbaren Energieversorgungsgerät drahtlos übertragen werden.

Gemäß einem fünften Aspekt der Erfindung wird die Aufgabe für ein parametrisierbares Energieversorgungsgerät mit einer Umverpackung durch eine Umverpackung für das parametrisierbare Energieversorgungsgerät gelöst, wobei eine Außenwand der Umverpackung eine Positionierungsanzeige umfasst, welche eine physikalische Position der drahtlosen Kommunikationsschnittstelle des in der Umverpackung angeordneten parametrisierbaren Energieversorgungsgerätes anzeigt, um eine Parametrierung des in der Umverpackung angeordneten parametrisierbaren Energieversorgungsgerätes zu ermöglichen. Dadurch wird der Vorteil erreicht, dass das parametrisierbare Energieversorgungsgerät in der Umverpackung effizient parametriert werden kann.

Die Positionierungsanzeige kann durch ein auf der Außenwand der Umverpackung aufgedrucktes Symbol gebildet sein.

Ausführungsbeispiele der Erfindung sind in den Zeichnungen dargestellt und werden im Folgenden näher beschrieben.

Es zeigen:
- Fig. 1: ein schematisches Diagramm eines parametrisierbaren Energieversorgungsgerätes gemäß einer Ausführungsform;
- Fig. 2: ein schematisches Diagramm eines Kommunikationsgerätes zur Parametrierung eines parametrisierbaren Energieversorgungsgerätes über ein Nahfeldkommunikationsnetzwerk gemäß einer Ausführungsform;
- Fig. 3: ein schematisches Diagramm eines Verfahrens zum Parametrieren eines parametrisierbaren Energieversorgungsgerätes; und
- Fig. 4: eine schematische Darstellung einer Anordnung zur Parametrierung eines in einer Umverpackung angeordneten parametrisierbaren Energieversorgungsgerätes mittels eines Kommunikationsgerätes.

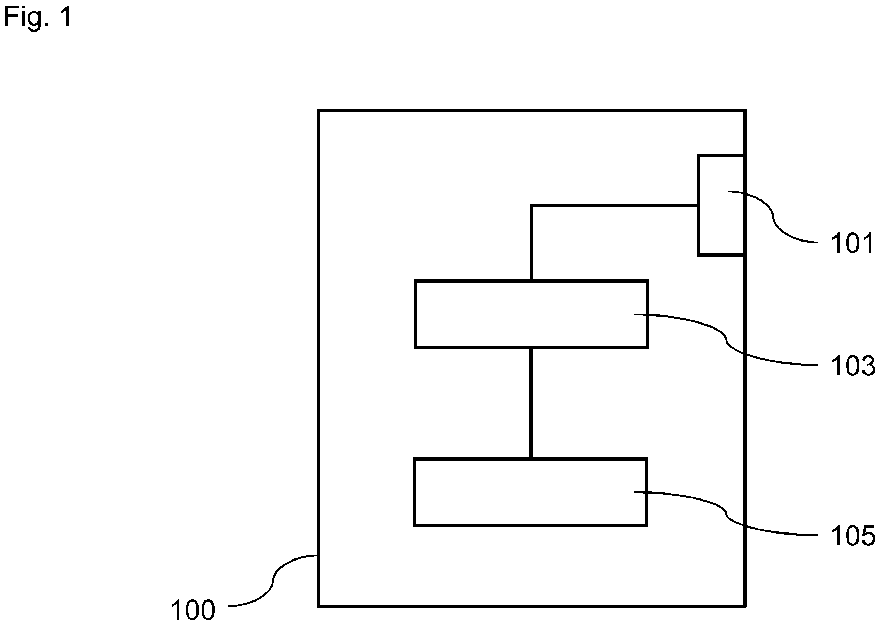

Fig. 1 zeigt ein schematisches Diagramm eines parametrisierbaren Energieversorgungsgerätes 100 gemäß einer Ausführungsform. Das parametrisierbare Energieversorgungsgerät 100 umfasst eine drahtlose Kommunikationsschnittstelle 101, einen Prozessor 103 und einen Speicher 105.

Das parametrisierbare Energieversorgungsgerät 100 ist ausgebildet mit: einer drahtlosen Kommunikationsschnittstelle 101 zum Empfangen von Parametrisierungsdaten zur Parametrierung des parametrisierbaren Energieversorgungsgerätes 100 über ein Kommunikationsnetzwerk; und einem Prozessor 103, welcher ausgebildet ist, zumindest einen Betriebsparameter des parametrisierbaren Energieversorgungsgerätes 100 auf der Basis der empfangenen Parametrisierungsdaten einzustellen.

Das parametrisierbares Energieversorgungsgerät 100 kann ein Spannungsversorgungsgerät oder ein Stromversorgungsgerät sein, welches zumindest einen einstellbaren Betriebsparameter aufweist. Der Betriebsparameter kann ein Sollwert für eine elektrische Ausgangsspannung oder einen elektrischen Ausgangsstrom des parametrisierbaren Energieversorgungsgerätes 100 sein. Beispielsweise umfasst das parametrisierbare Energieversorgungsgerät 100 ein elektronisch einstellbares Potentiometer zum Einstellen der elektrischen Ausgangsspannung oder des elektrischen Ausgangsstromes des parametrisierbaren Energieversorgungsgerätes 100. Ferner ist der Betriebsparameter einer elektrischen Ausgangskennliniencharakteristik des parametrisierbaren Energieversorgungsgerätes 100 oder einem Überlastverhalten des parametrisierbaren Energieversorgungsgerätes 100 zugeordnet. Umfasst das parametrisierbare Energieversorgungsgerät 100 ferner einen Signaleingang, so kann der Betriebsparameter ein Parameter zur Auswertung der über den Signaleingang empfangenen Signale sein. Ferner ist der Signaleingang zum Ferneinschalten des parametrisierbaren Energieversorgungsgerätes 100 ausgebildet, so kann der Betriebsparameter ein Schwellwert für eine elektrische Spannung des Eingangssignals sein, wobei das parametrisierbare Energieversorgungsgerät 100 bei einem Überschreiten des Schwellwerts durch die elektrische Spannung des Eingangssignals aktiviert wird und/oder bei einem Unterschreiten des Schwellwertes durch die elektrische Spannung des Eingangssignals deaktiviert wird.

Die Parametrisierungsdaten umfassen einen Betriebsparameter und/oder eine Information zur Auswahl eines Betriebsmodus oder eines Betriebsparameters. Dabei weist das parametrisierbare Energieversorgungsgerät 100 einen ersten Betriebsmodus mit vorbestimmten ersten Betriebsparametern und einen zweiten Betriebsmodus mit vorbestimmten zweiten Betriebsparametern auf, wobei der jeweilige Betriebsmodus auf der Basis der Information eingestellt wird.

Der Prozessor 103 ist ferner ausgebildet, die empfangenen Parametrisierungsdaten oder den Betriebsparameter auf Gültigkeit zu überprüfen. Beispielsweise kann der Betriebsparameter auf Unterschreiten oder Überschreiten eines vorbestimmten Schwellwertes überprüft werden. Ferner können die Parametrisierungsdaten und/oder der Betriebsparameter mittels einer zyklischen Redundanzprüfung, beispielsweise nach dem Standard Cyclic Redundancy Check 8 (CRC-8), auf Gültigkeit überprüft werden.

Die drahtlose Kommunikationsschnittstelle 101 kann eine Radiofrequenzidentifikationsschnittstelle zur Kommunikation mittels Radio-Frequency-Identification (RFID), beispielsweise nach dem Standard ISO/IEC 14443 oder ISO/IEC 18000-3, sein. Ferner kann die drahtlose Kommunikationsschnittstelle 101 eine Nahfeldkommunikationsschnittstelle zur Kommunikation mittels Near-Field-Communication (NFC), beispielsweise nach dem Standard ISO/IEC 14443 oder ISO/IEC 18092, sein. Die drahtlose Kommunikationsschnittstelle 101 kann ferner zur Kommunikation nach dem Standard Bluetooth, ZigBee oder Wireless Local Area Network (W-LAN) ausgebildet sein.

Das Kommunikationsnetzwerk kann ein Funknetzwerk, beispielsweise ein Nahfeldkommunikationsnetzwerk, ein Telefonnetzwerk, beispielsweise ein Mobilfunknetzwerk, ein Computernetzwerk, beispielsweise ein Wireless Local Area Network (W-LAN), und/oder das Internet sein.

Das parametrisierbare Energieversorgungsgerät 100 kann ferner mit einem Speicher 105 zum Speichern der empfangenen Parametrisierungsdaten ausgebildet sein, wobei der Prozessor 103 ausgebildet ist, die Parametrisierungsdaten aus dem Speicher 105 auszulesen, und den Betriebsparameter des parametrisierbaren Energieversorgungsgerätes 100 auf der Basis der ausgelesenen Parametrisierungsdaten einzustellen.

Der Speicher 105 kann einen elektrisch löschbaren programmierbaren Nur-Lese-Speicher, beispielsweise einen Electrically-Erasable-Programmable-Read-Only-Memory (EEPROM) Speicher, umfassen. Ferner kann der Prozessor 103 ausgebildet sein, die Parametrisierungsdaten bei einer Aktivierung des parametrisierbaren Energieversorgungsgerätes 100 aus dem Speicher 105 auszulesen.

Gemäß einer Ausführungsform kann eine elektrische Ausgangsspannung oder ein elektrischer Ausgangsstrom des parametrisierbaren Energieversorgungsgerätes 100 mittels eines Potentiometers eingestellt oder parametriert werden.

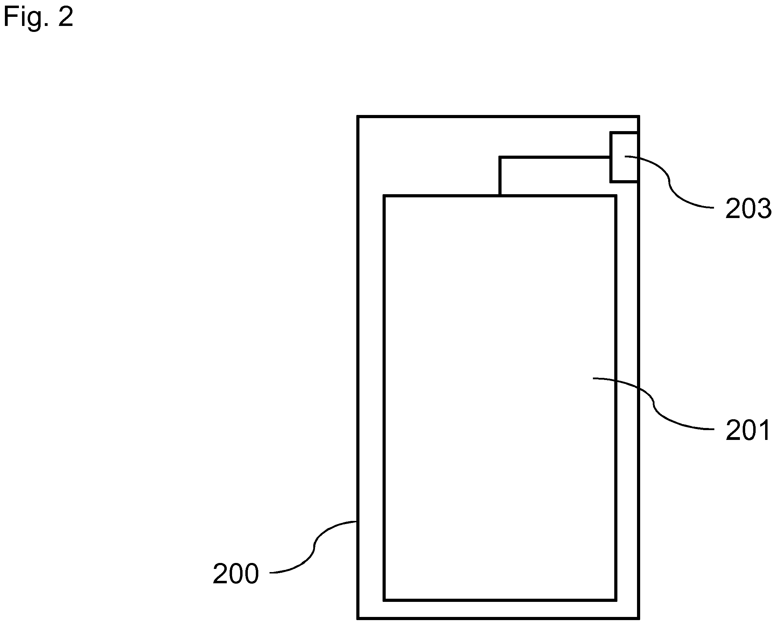

Fig. 2 zeigt ein schematisches Diagramm eines Kommunikationsgerätes 200 zur Parametrierung eines parametrisierbaren Energieversorgungsgerätes 100 über ein Nahfeldkommunikationsnetzwerk gemäß einer Ausführungsform. Das Kommunikationsgerät 200 umfasst eine Benutzerschnittstelle 201 und eine Nahfeldkommunikationsschnittstelle 203.

Das Kommunikationsgerät 200 zur Parametrierung eines parametrisierbaren Energieversorgungsgerätes 100 über ein Nahfeldkommunikationsnetzwerk kann ausgebildet sein mit: einer Benutzerschnittstelle 201 zum Festlegen von Parametrisierungsdaten zur Parametrierung des parametrisierbaren Energieversorgungsgerätes 100; und einer Nahfeldkommunikationsschnittstelle 203 zum Aussenden der festgelegten Parametrisierungsdaten an das parametrisierbare Energieversorgungsgerät 100 über das Nahfeldkommunikationsnetzwerk.

Das Kommunikationsgerät 200 kann ein Computer, ein Smartphone oder ein Handgerät sein. Ferner kann das Kommunikationsgerät 200 ein mobiles Kommunikationsgerät sein. Die Benutzerschnittstelle 201 kann eine Tastatur, eine Anzeigeeinrichtung und/oder einen Touchscreen umfassen.

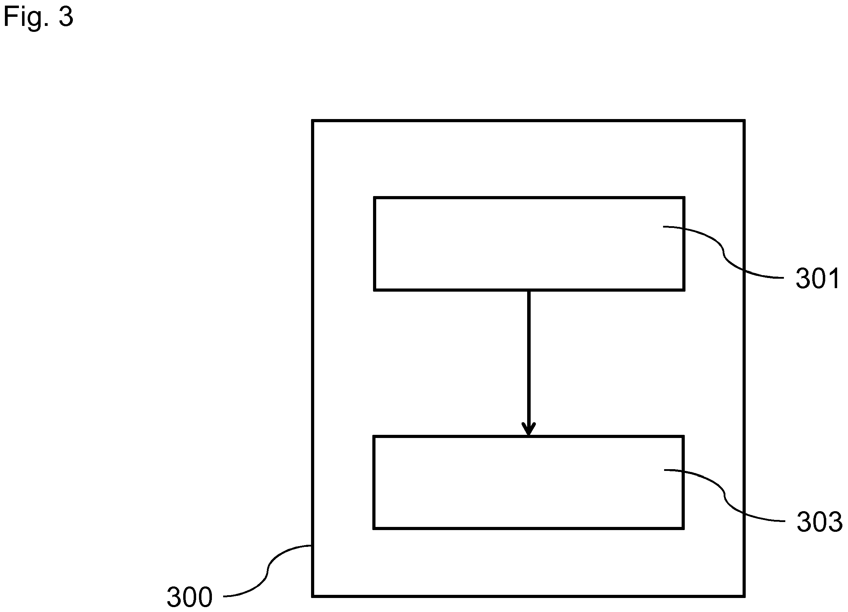

Fig. 3 zeigt ein schematisches Diagramm eines Verfahrens 300 zum Parametrieren eines parametrisierbaren Energieversorgungsgerätes 100. Das Verfahren 300 umfasst die Schritte eines drahtlosen Übertragens 301 und eines Einstellens 303.

Das Verfahren 300 zum Parametrieren eines parametrisierbaren Energieversorgungsgerätes 100 umfasst: drahtloses Übertragen 301 von Parametrisierungsdaten an das parametrisierbare Energieversorgungsgerät 100 über ein Kommunikationsnetzwerk; und Einstellen 303 zumindest eines Betriebsparameters des parametrisierbaren Energieversorgungsgerätes 100 auf der Basis der empfangenen Parametrisierungsdaten in dem parametrisierbaren Energieversorgungsgerät 100.

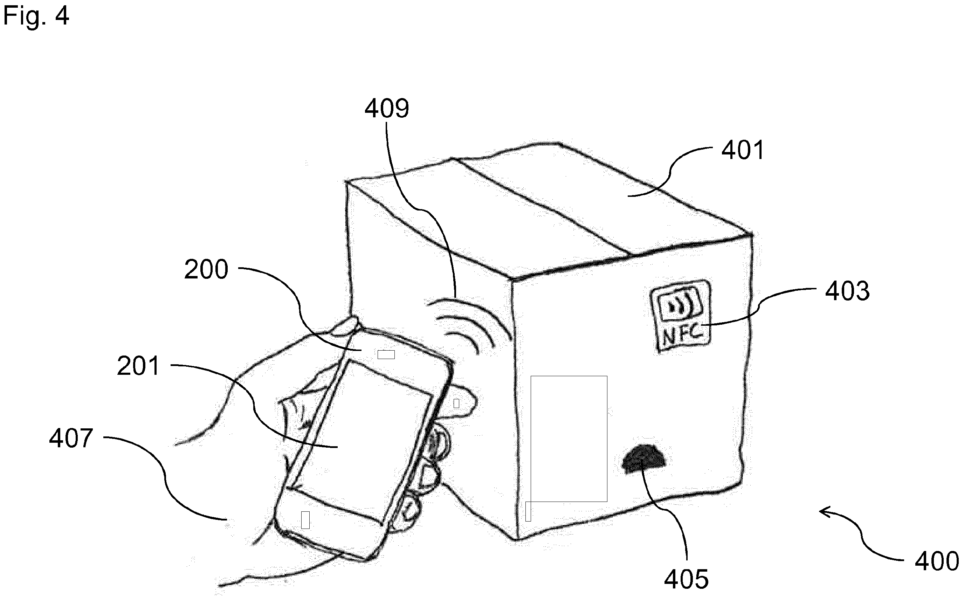

Die Parametrisierungsdaten werden von dem Kommunikationsgerät 200 zu dem parametrisierbaren Energieversorgungsgerät 100 drahtlos übertragen. Fig. 4 zeigt eine schematische Darstellung einer Anordnung 400 zur Parametrierung eines in einer Umverpackung 401 angeordneten parametrisierbaren Energieversorgungsgerätes 100 mittels eines Kommunikationsgerätes 200. Die Umverpackung 401 umfasst eine Positionierungsanzeige 403 und eine Trageöffnung 405. Das Kommunikationsgerät 200 ist in einer Hand 407 eines Benutzers des Kommunikationsgerätes 200 aufgenommen und umfasst eine Benutzerschnittstelle 201. Ferner ist ein elektromagnetisches Signal 409 abgebildet.

Eine Außenwand der Umverpackung 401 umfasst eine Positionierungsanzeige 403, welche eine physikalische Position der drahtlosen Kommunikationsschnittstelle 101 des in der Umverpackung 401 angeordneten parametrisierbaren Energieversorgungsgerätes 100 anzeigt, um eine Parametrierung des in der Umverpackung 401 angeordneten parametrisierbaren Energieversorgungsgerätes 100 zu ermöglichen.

Die Positionierungsanzeige 403 kann durch ein auf der Außenwand der Umverpackung 401 aufgedrucktes Symbol gebildet sein.

Der Benutzer des Kommunikationsgerätes 200 kann mittels der Benutzerschnittstelle 201 Parametrisierungsdaten festlegen, welche mittels Nahfeldkommunikation an das in der Umverpackung 401 aufgenommene deaktivierte parametrisierbare Energieversorgungsgerät 100 übertragen werden können. Die Übertragung der Parametrisierungsdaten ist durch das elektromagnetische Signal 409 symbolisiert.

Die Positionierungsanzeige 403 auf der Umverpackung 401 markiert die Position der nicht abgebildeten drahtlosen Kommunikationsschnittstelle 101 des parametrisierbaren Energieversorgungsgerätes 100. Hält der Benutzer das Kommunikationsgerät 200 bzw. die nichtabgebildete Nahfeldkommunikationsschnittstelle 203 des Kommunikationsgerätes 200 an die Positionierungsanzeige 403, so kann die drahtlose Kommunikationsschnittstelle 101 des parametrisierbaren Energieversorgungsgerätes 100 drahtlos mit elektrischer Energie versorgt und das parametrisierbare Energieversorgungsgerät 100 parametriert werden.

Gemäß einer Ausführungsform kann die parametrisierbare Energieversorgung 100 oder eine Stromversorgung sekundärseitig beliebig verschaltet oder geerdet werden.

Gemäß einer weiteren Ausführungsform kann die drahtlose Kommunikationsschnittstelle 101 des parametrisierbaren Energieversorgungsgerätes 100 oder ein NFC-Empfänger primärseitig angeschlossen werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Parametrisierbares Energieversorgungsgerät
- 101: Drahtlose Kommunikationsschnittstelle
- 103: Prozessor
- 105: Speicher

- 200: Kommunikationsgerät
- 201: Benutzerschnittstelle
- 203: Nahfeldkommunikationsschnittstelle

- 300: Verfahren
- 301: Drahtloses Übertragen
- 303: Einstellen

- 400: Anordnung
- 401: Umverpackung
- 403: Positionierungsanzeige
- 405: Trageöffnung
- 407: Hand
- 409: Elektromagnetisches Signal

## Patentansprüche

1. Parametrisierbares Energieversorgungsgerät (100) mit einer Umverpackung (401), wobei das parametrisierbare Energieversorgungsgerät (100) mit:
einer drahtlosen Kommunikationsschnittstelle (101) zum Empfangen von Parametrisierungsdaten zur Parametrierung des parametrisierbaren Energieversorgungsgerätes (100) über ein Kommunikationsnetzwerk ausgebildet ist, wobei die drahtlose
Kommunikationsschnittstelle (101) eine Nahfeldkommunikationsschnittstelle umfasst; und
einem Prozessor (103), welcher ausgebildet ist, zumindest einen Betriebsparameter des parametrisierbaren Energieversorgungsgerätes (100) auf der Basis der empfangenen Parametrisierungsdaten einzustellen;
wobei ein Gehäuse des parametrisierbaren Energieversorgungsgerätes ein Kunststoffgehäuse ist oder ein für elektromagnetische Signale durchlässiges Gehäuseelement umfasst,
wobei der zumindest eine Betriebsparameter einer elektrischen Ausgangskennliniencharakteristik des parametrisierbaren Energieversorgungsgerätes oder einem Überlastverhalten des parametrisierbaren Energieversorgungsgerätes zugeordnet ist,
wobei das parametrisierbare Energieversorgungsgerät einen Signaleingang umfasst, der zum Ferneinschalten des parametrisierbaren Energieversorgungsgerätes ausgebildet ist, wobei der Betriebsparameter ein Parameter zur Auswertung von über den Signaleingang empfangenen Eingangssignalen ist und einen Schwellwert für ein Eingangssignal, insbesondere eine elektrische Spannung des Eingangssignals vorgibt, wobei das parametrisierbare Energieversorgungsgerät bei einem Überschreiten des Schwellwerts durch das Eingangssignal aktiviert wird und/oder bei einem Unterschreiten des Schwellwertes durch das Eingangssignal deaktiviert wird,
wobei der Prozessor ferner ausgebildet ist, die empfangenen Parametrisierungsdaten und/oder den Betriebsparameter auf Gültigkeit zu überprüfen, insbesondere den Betriebsparameter auf ein Unterschreiten oder Überschreiten eines vorbestimmten Schwellwertes, und die Parametrisierungsdaten und/oder den Betriebsparameter mittels einer zyklischen Redundanzprüfung auf Gültigkeit,
wobei die Parametrisierungsdaten einen Betriebsparameter und/oder eine Information zur Auswahl von Betriebsmodi oder Betriebsparametern umfassen, wobei das parametrisierbare Energieversorgungsgerät einen ersten Betriebsmodus mit vorbestimmten ersten Betriebsparametern und einen zweiten Betriebsmodus mit vorbestimmten zweiten Betriebsparametern aufweist, wobei der jeweilige Betriebsmodus auf der Basis der Information eingestellt wird, wobei das parametrisierbare Energieversorgungsgerät so ausgebildet ist, dass die drahtlose Kommunikationsschnittstelle (101) drahtlos mit Energie versorgt wird, sodass das parametrisierbare Energieversorgungsgerät im deaktivierten Zustand parametriert werden kann,
wobei das parametrisierbare Energieversorgunggerät in einer Umverpackung (401) angeordnet ist, wobei eine Außenwand der Umverpackung (401) eine Positionierungsanzeige (403) umfasst, welche eine physikalische Position der drahtlosen Kommunikationsschnittstelle (101) des in der Umverpackung (401) angeordneten parametrisierbaren Energieversorgungsgerätes (100) anzeigt, um eine Parametrierung des in der Umverpackung (401) angeordneten parametrisierbaren Energieversorgungsgerätes (100) zu ermöglichen.

2. Parametrisierbares Energieversorgungsgerät (100) mit einer Umverpackung (401) nach Anspruch 1, mit einem Speicher (105) zum Speichern der empfangenen Parametrisierungsdaten, wobei der Prozessor (103) ausgebildet ist, die Parametrisierungsdaten aus dem Speicher (105) auszulesen, und den Betriebsparameter des parametrisierbaren Energieversorgungsgerätes (100) auf der Basis der ausgelesenen Parametrisierungsdaten einzustellen.

3. Parametrisierbares Energieversorgungsgerät (100) mit einer Umverpackung (401) nach Anspruch 1 oder 2, wobei die drahtlose Kommunikationsschnittstelle (101) ausgebildet ist, die Parametrisierungsdaten über das Kommunikationsnetzwerk von einem Kommunikationsgerät (200) drahtlos zu empfangen.

4. Parametrisierbares Energieversorgungsgerät (100) mit einer Umverpackung (401) nach einem der vorstehenden Ansprüche, wobei die drahtlose Kommunikationsschnittstelle (101) ferner zum Aussenden des Betriebsparameters über ein Kommunikationsnetzwerk an ein Kommunikationsgerät (200) ausgebildet ist. mit einer Umverpackung (401)

5. Parametrisierbares Energieversorgungsgerät (100) mit einer Umverpackung (401) nach einem der vorstehenden Ansprüche, wobei die drahtlose Kommunikationsschnittstelle (101) innerhalb eines Gehäuses des parametrisierbaren Energieversorgungsgerätes (100) oder in einer Gehäusewand eines Gehäuses des parametrisierbaren Energieversorgungsgerätes (100) angeordnet ist.

6. Parametrisierbares Energieversorgungsgerät (100) mit einer Umverpackung (401) J Z nach einem der vorstehenden Ansprüche, wobei die drahtlose Kommunikationsschnittstelle (101) eine Antenne umfasst, welche innerhalb eines Gehäuses des parametrisierbaren Energieversorgungsgerätes (100) angeordnet ist oder in einer Gehäusewand eines Gehäuses des parametrisierbaren Energieversorgungsgerätes (100) integriert ist.

7. Parametrisierbares Energieversorgungsgerät (100) mit einer Umverpackung (401) nach einem der vorstehenden Ansprüche, wobei der Betriebsparameter eine elektrische Ausgangsspannung oder einen elektrischen Ausgangsstrom oder eine Frequenz der elektrischen Ausgangsspannung oder eine Frequenz des elektrischen Ausgangsstroms des parametrisierbaren Energieversorgungsgerätes (100) ist oder umfasst.

8. Parametrisierbares Energieversorgungsgerät (100) mit einer Umverpackung (401) nach einem der vorstehenden Ansprüche, mit einer Anzeigeeinrichtung zum Anzeigen des Betriebsparameters.

9. Parametrisierbares Energieversorgungsgerät (100) mit einer Umverpackung (401) nach einem der vorstehenden Ansprüche, mit einer kontaktbehafteten Kommunikationsschnittstelle zum Aussenden des Betriebsparameters über ein weiteres Kommunikationsnetzwerk.

10. Verfahren (300) zum Parametrieren eines parametrisierbaren Energieversorgungsgerätes (100) mit einer Umverpackung, wobei das Verfahren folgende Schritte aufweist:
drahtloses Übertragen (301) von Parametrisierungsdaten an das parametrisierbare Energieversorgungsgerät (100) über ein Kommunikationsnetzwerk, wobei das Kommunikationsnetzwerk als ein Nahfeldkommunikationsnetzwerk ausgebildet ist; wobei ein Gehäuse des parametrisierbaren Energieversorgungsgerätes ein Kunststoffgehäuse ist oder ein für elektromagnetische Signale durchlässiges Gehäuseelement umfasst; und
Einstellen (303) zumindest eines Betriebsparameters des parametrisierbaren Energieversorgungsgerätes (100) auf der Basis der empfangenen Parametrisierungsdaten in dem parametrisierbaren Energieversorgungsgerät (100),
wobei der zumindest eine Betriebsparameter einer elektrischen Ausgangskennliniencharakteristik des parametrisierbaren Energieversorgungsgerätes oder einem Überlastverhalten des parametrisierbaren Energieversorgungsgerätes zugeordnet ist,
wobei das parametrisierbare Energieversorgungsgerät einen Signaleingang umfasst, der zum Ferneinschalten des parametrisierbaren Energieversorgungsgerätes ausgebildet ist,
wobei der Betriebsparameter ein Parameter zur Auswertung von über den Signaleingang empfangenen Eingangssignalen ist und einen Schwellwert für ein Eingangssignal, insbesondere eine elektrische Spannung des Eingangssignals vorgibt, wobei das parametrisierbare Energieversorgungsgerät bei einem Überschreiten des Schwellwerts durch das Eingangssignal aktiviert wird und/oder bei einem Unterschreiten des Schwellwertes durch das Eingangssignal deaktiviert wird,
wobei das Verfahren ferner umfasst:
Überprüfen der empfangenen Parametrisierungsdaten und/oder des Betriebsparameters auf Gültigkeit, insbesondere des Betriebsparameters auf ein Unterschreiten oder Überschreiten eines vorbestimmten Schwellwertes, und der Parametrisierungsdaten und/oder des Betriebsparameters mittels einer zyklischen Redundanzprüfung auf Gültigkeit,
wobei die Parametrisierungsdaten einen Betriebsparameter und/oder eine Information zur Auswahl von Betriebsmodi oder Betriebsparametern umfassen, wobei das parametrisierbare Energieversorgungsgerät einen ersten Betriebsmodus mit vorbestimmten ersten Betriebsparametern und einen zweiten Betriebsmodus mit vorbestimmten zweiten Betriebsparametern aufweist, wobei der jeweilige Betriebsmodus auf der Basis der Information eingestellt wird,
wobei das parametrisierbare Energieversorgungsgerät im deaktivierten Zustand parametriert wird,
wobei das parametrisierbare Energieversorgunggerät in einer Umverpackung (401) angeordnet ist, wobei eine Außenwand der Umverpackung (401) eine Positionierungsanzeige (403) umfasst, welche eine physikalische Position der drahtlosen Kommunikationsschnittstelle (101) des in der Umverpackung (401) angeordneten parametrisierbaren Energieversorgungsgerätes (100) anzeigt, um eine Parametrierung des in der Umverpackung (401) angeordneten parametrisierbaren Energieversorgungsgerätes (100) zu ermöglichen.

11. Parametrisierbares Energieversorgungsgerät (100) mit einer Umverpackung (401) nach einem der Patentansprüche 1-9, wobei eine Außenwand der Umverpackung (401) eine Positionierungsanzeige (403) umfasst, welche eine physikalische Position der drahtlosen Kommunikationsschnittstelle (101) des in der Umverpackung (401) angeordneten parametrisierbaren Energieversorgungsgerätes (100) anzeigt, um eine Parametrierung des in der Umverpackung (401) angeordneten parametrisierbaren Energieversorgungsgerätes (100) zu ermöglichen.

## Claims

1. A parameterizable power supply device (100) with an outer package (401), wherein the parameterizable power supply device (100) comprises:
a wireless communication interface (101) configured to receive parameterization data to parameterize the parameterizable power supply device (100) via a communication network, wherein the wireless communication interface (101) comprises a near field communication interface; and
a processor (103) which is configured to set at least one operating parameter of the parameterizable power supply device (100) based on the received parameterization data;
wherein a casing of the parameterizable power supply device (100) is a plastic casing or comprises a casing element that is permeable to electromagnetic signals;
wherein the at least one operating parameter is assigned to an electrical output characteristic of the parameterizable power supply device (100) or an overload behavior of the parameterizable power supply device (100),
wherein the parameterizable power supply device (100) comprises a signal input that is configured to switch on remotely the parameterizable power supply device (100),
wherein the operating parameter is a parameter for evaluation of input signals that are received from the signal input and gives a threshold for an input signal, in particular gives a threshold for an electrical voltage of the input signal, wherein the parameterizable power supply device (100) is activated if the input signal exceeds the threshold and/or is deactivated if the input signal falls below the threshold,
wherein the processor is further configured to verify the received parameterization data and/or the operating parameter for validity, in particular verify the operating parameter for falling below or exceeding a predetermined threshold and to verify the parameterization data and/or the operating parameter by means of a cyclic redundancy check,
wherein the parameterization data comprises an operating parameter and/or an information for selection of operating modes or operating parameters, wherein the parameterizable power supply device (100) comprises a first operating mode with predetermined first operating parameters and a second operating mode with predetermined second operating parameters, wherein the respective operating mode is set based on the information, wherein the parameterizable power supply device (100) is configured to provide wireless energy to the wireless communication interface (101) so that the parameterizable power supply device (100) can be parameterized in a deactivated state,
wherein the parameterizable power supply device (100) is arranged in an outer package (401), wherein an outer wall of the outer package (401) comprises a positioning display, which displays a physical position of the wireless communication interface (101) of the parameterizable power supply device (100) that is arranged in the outer package (401), in order to enable a parameterization of the parameterizable power supply device (100) that is arranged in the outer package (401).

2. The parameterizable power supply device (100) with an outer package (401) of claim 1, comprising a memory storage (105) to store the received parameterization data, wherein the processor (103) is configured to read the parameterization data from the memory storage (105) and to set the operating parameter of the parameterizable power supply device (100) based on the read parameterization data.

3. The parameterizable power supply device (100) with an outer package (401) of claim 1 or 2, wherein the wireless communication interface (101) is configured to wirelessly receive the parameterization data via the communication network from a communication device (200).

4. The parameterizable power supply device (100) with an outer package (401) according to one of the preceding claims, wherein the wireless communication interface (101) is further configured to send the operating parameter via a communication network to a communication device (200).

5. The parameterizable power supply device (100) with an outer package (401) according to one of the preceding claims, wherein the wireless communication interface (101) is arranged within a casing of the parameterizable power supply device (100) or is integrated in a casing wall of a casing of the parameterizable power supply device (100).

6. The parameterizable power supply device (100) with an outer package (401) according to one of the preceding claims, wherein the wireless communication interface (101) comprises an antenna which is arranged within a casing of the parameterizable power supply device (100) or is integrated in a casing wall of a casing of the parameterizable power supply device (100).

7. The parameterizable power supply device (100) with an outer package (401) according to one of the preceding claims, wherein the operating parameter is or comprises an electrical output voltage or an electrical output current or a frequency of the electrical output voltage or a frequency of the electrical output current of the parameterizable power supply device (100).

8. The parameterizable power supply device (100) with an outer package (401) according to one of the preceding claims, comprising a display device to display the operating parameter.

9. The parameterizable power supply device (100) with an outer package (401) according to one of the preceding claims, comprising a contact-based communication interface to send the operating parameter via another communication network.

10. A method for parameterizing a parameterizable power supply device (100) with an outer package (401), wherein the method comprises the following steps:
Wireless transmission (301) of parameterization data to the parameterizable power supply device (100) via a communication network, wherein the communication network is configured as a near field communication network; wherein a casing of the parameterizable power supply device (100) is a plastic casing or comprises a casing element that is permeable to electromagnetic signals; and
Setting (303) at least one operating parameter of the parameterizable power supply device (100) based on the received parameterization data in the parameterizable power supply device (100), wherein the at least one operating parameter is assigned to an electrical output characteristic of the parameterizable power supply device (100) or to an overload behavior of the parameterizable power supply device (100),
wherein the parameterizable power supply device (100) comprises a signal input that is configured to switch on remotely the parameterizable power supply device (100),
wherein the operating parameter is a parameter for evaluation of input signals that are received from the signal input and gives a threshold for an input signal, in particular gives a threshold for an electrical voltage of the input signal, wherein the parameterizable power supply device (100) is activated if the input signal exceeds the threshold and/or is deactivated if the input signal falls below the threshold,
wherein the method further comprises:
Verification of the received parameterization data and/or the operating parameter for validity, in particular verify the operating parameter for falling below or exceeding a predetermined threshold and verify the parameterization data and/or the operating parameter by means of a cyclic redundancy check,
wherein the parameterization data comprises an operating parameter and/or an information for selection of operating modes or operating parameters, wherein the parameterizable power supply device (100) comprises a first operating mode with predetermined first operating parameters and a second operating mode with predetermined second operating parameters, wherein the respective operating mode is set based on the information,
wherein the parameterizable power supply device (100) is parameterized in a deactivated state,
wherein the parameterizable power supply device (100) is arranged in an outer package (401), wherein an outer wall of the outer package (401) comprises a positioning display, which displays a physical position of the wireless communication interface (101) of the parameterizable power supply device (100) that is arranged in the outer package (401), in order to enable a parameterization of the parameterizable power supply device (100) that is arranged in the outer package (401).

11. The parameterizable power supply device (100) with an outer package (401) according to one of the claims 1 to 9, wherein an outer wall of the outer package (401) comprises a positioning display, which displays a physical position of the wireless communication interface (101) of the parameterizable power supply device (100) that is arranged in the outer package (401), in order to enable a parameterization of the parameterizable power supply device (100) that is arranged in the outer package (401).

## Revendications

1. Appareil d'alimentation en énergie paramétrable (100) comportant un emballage extérieur (401), dans lequel l'appareil d'alimentation en énergie paramétrable (100) comprend :
une interface de communication sans fil (101) servant à recevoir des données de paramétrage servant à paramétrer l'appareil d'alimentation en énergie paramétrable (100) par l'intermédiaire d'un réseau de communication, dans lequel l'interface de communication sans fil (101) comprend une interface de communication en champ proche ; et
un processeur (103), qui est conçu pour régler au moins un paramètre de fonctionnement de l'appareil d'alimentation en énergie paramétrable (100) sur la base des données de paramétrage reçues ;
dans lequel un boîtier de l'appareil d'alimentation en énergie paramétrable est un boîtier en plastique ou comprend un élément de boîtier perméable aux signaux électromagnétiques,
dans lequel ledit au moins un paramètre de fonctionnement est associé à une courbe caractéristique de sortie électrique de l'appareil d'alimentation en énergie paramétrable ou à un comportement de surcharge de l'appareil d'alimentation en énergie paramétrable,
dans lequel l'appareil d'alimentation en énergie paramétrable comprend une entrée de signal qui est conçue pour la mise en marche à distance de l'appareil d'alimentation en énergie paramétrable,
dans lequel le paramètre de fonctionnement est un paramètre servant à évaluer des signaux d'entrée reçus par l'intermédiaire de l'entrée de signal et qui fixe une valeur de seuil pour un signal d'entrée, en particulier une tension électrique du signal d'entrée, dans lequel l'appareil d'alimentation en énergie paramétrable est activé par le signal d'entrée lorsque le signal d'entrée est supérieur à la valeur de seuil et/ou est désactivé par le signal d'entrée lorsque le signal d'entrée est inférieur à la valeur seuil,
dans lequel le processeur est en outre conçu pour vérifier la validité des données de paramétrage reçues et/ou du paramètre de fonctionnement, en particulier du paramètre de fonctionnement pour savoir s'il est inférieur ou supérieur à une valeur de seuil prédéterminée, et pour vérifier la validité des données de paramétrage et/ou du paramètre de fonctionnement au moyen d'un contrôle de redondance cyclique,
dans lequel les données de paramétrage comprennent un paramètre de fonctionnement et/ou une information servant à sélectionner des modes de fonctionnement ou des paramètres de fonctionnement, dans lequel l'appareil d'alimentation en énergie paramétrable présente un premier mode de fonctionnement avec des premiers paramètres de fonctionnement prédéterminés et un second mode de fonctionnement avec des seconds paramètres de fonctionnement prédéterminés, dans lequel le mode de fonctionnement respectif est réglé sur la base de ladite information, dans lequel l'appareil d'alimentation en énergie paramétrable est conçu de manière à ce que l'interface de communication sans fil (101) soit alimentée en énergie sans fil, de sorte que l'appareil d'alimentation en énergie paramétrable puisse être paramétré dans l'état désactivé,
dans lequel l'appareil d'alimentation en énergie paramétrable est disposé dans un emballage extérieur (401), dans lequel une paroi extérieure de l'emballage extérieur (401) comprend un indicateur de positionnement (403) indiquant une position physique de l'interface de communication sans fil (101) de l'appareil d'alimentation en énergie paramétrable (100) disposé dans l'emballage extérieur (401) pour permettre un paramétrage de l'appareil d'alimentation en énergie paramétrable (100) disposé dans l'emballage extérieur (401).

2. Appareil d'alimentation en énergie paramétrable (100), comportant un emballage extérieur (401) selon la revendication 1, et comportant une mémoire (105) servant à stocker les données de paramétrage reçues, dans lequel le processeur (103) est conçu pour lire les données de paramétrage depuis la mémoire (105) et pour régler le paramètre de fonctionnement de l'appareil d'alimentation en énergie paramétrable (100) sur la base des données de paramétrage lues.

3. Appareil d'alimentation en énergie paramétrable (100) comportant un emballage extérieur (401) selon la revendication 1 ou 2, dans lequel l'interface de communication sans fil (101) est conçue pour recevoir sans fil les données de paramétrage d'un appareil de communication (200) par l'intermédiaire du réseau de communication.

4. Appareil d'alimentation en énergie paramétrable (100) comportant un emballage extérieur (401) selon l'une des revendications précédentes, dans lequel l'interface de communication sans fil (101) est en outre conçue pour transmettre le paramètre de fonctionnement à un appareil de communication (200) par l'intermédiaire d'un réseau de communication.

5. Appareil d'alimentation en énergie paramétrable (100) comportant un emballage extérieur (401) selon l'une des revendications précédentes, dans lequel l'interface de communication sans fil (101) est disposée dans un boîtier de l'appareil d'alimentation en énergie paramétrable (100) ou dans une paroi de boîtier d'un boîtier de l'appareil d'alimentation en énergie paramétrable (100).

6. Appareil d'alimentation en énergie paramétrable (100) comportant un emballage extérieur (401) selon l'une des revendications précédentes, dans lequel l'interface de communication sans fil (101) comprend une antenne qui est disposée à l'intérieur d'un boîtier de l'appareil d'alimentation en énergie paramétrable (100) ou est intégrée dans une paroi de boîtier d'un boîtier de l'appareil d'alimentation en énergie paramétrable (100).

7. Appareil d'alimentation en énergie paramétrable (100) comportant un emballage extérieur (401) selon l'une des revendications précédentes, dans lequel le paramètre de fonctionnement est ou comprend une tension de sortie électrique ou un courant de sortie électrique ou une fréquence de la tension de sortie électrique ou une fréquence du courant de sortie électrique de l'appareil d'alimentation en énergie paramétrable (100).

8. Appareil d'alimentation en énergie paramétrable (100) comportant un emballage extérieur (401) selon l'une des revendications précédentes, et comportant un dispositif d'affichage servant à afficher le paramètre de fonctionnement.

9. Appareil d'alimentation en énergie paramétrable (100) comportant un emballage extérieur (401) selon l'une des revendications précédentes, et comportant une interface de communication par contact servant à transmettre le paramètre de fonctionnement par l'intermédiaire d'un autre réseau de communication.

10. Procédé (300) de paramétrage d'un appareil d'alimentation en énergie paramétrable (100) comportant un emballage extérieur, dans lequel le procédé comprend les étapes suivantes :
la transmission sans fil (301) de données de paramétrage à l'appareil d'alimentation en énergie paramétrable (100) par l'intermédiaire d'un réseau de communication, dans lequel le réseau de communication est réalisé sous la forme d'un réseau de communication en champ proche ; dans lequel un boîtier de l'appareil d'alimentation en énergie paramétrable est un boîtier en plastique ou comprend un élément de boîtier perméable aux signaux électromagnétiques ; et
le réglage (303) d'au moins un paramètre de fonctionnement de l'appareil d'alimentation en énergie paramétrable (100) sur la base des données de paramétrage reçues dans l'appareil d'alimentation en énergie paramétrable (100),
dans lequel ledit au moins un paramètre de fonctionnement est associé à une courbe caractéristique de sortie électrique de l'appareil d'alimentation en énergie paramétrable ou à un comportement de surcharge de l'appareil d'alimentation en énergie paramétrable,
dans lequel l'appareil d'alimentation en énergie paramétrable comprend une entrée de signal qui est conçue pour la mise en marche à distance de l'appareil d'alimentation en énergie paramétrable,
dans lequel le paramètre de fonctionnement est un paramètre servant à évaluer des signaux d'entrée reçus par l'intermédiaire de l'entrée de signal et qui fixe une valeur de seuil pour un signal d'entrée, en particulier une tension électrique du signal d'entrée, dans lequel l'appareil d'alimentation en énergie paramétrable est activé lorsque le signal d'entrée est supérieur à la valeur de seuil et/ou est désactivé lorsque le signal d'entrée est inférieur à la valeur de seuil,
dans lequel le procédé comprend en outre :
la vérification de la validité des données de paramétrage reçues et/ou du paramètre de fonctionnement, en particulier du paramètre de fonctionnement pour savoir s'il est inférieur ou supérieur à une valeur de seuil prédéterminée, et la vérification de la validité des données de paramétrage et/ou du paramètre de fonctionnement au moyen d'un contrôle de redondance cyclique,
dans lequel les données de paramétrage comprennent un paramètre de fonctionnement et/ou une information servant à sélectionner des modes de fonctionnement ou des paramètres de fonctionnement, dans lequel l'appareil d'alimentation en énergie paramétrable présente un premier mode de fonctionnement avec des premiers paramètres de fonctionnement prédéterminés et un second mode de fonctionnement avec des seconds paramètres de fonctionnement prédéterminés, dans lequel le mode de fonctionnement respectif est réglé sur la base de ladite information,
dans lequel l'appareil d'alimentation en énergie paramétrable est paramétré dans l'état désactivé,
dans lequel l'appareil d'alimentation en énergie paramétrable est disposé dans un emballage extérieur (401), dans lequel une paroi extérieure de l'emballage extérieur (401) comprend un indicateur de positionnement (403) indiquant une position physique de l'interface de communication sans fil (101) de l'appareil d'alimentation en énergie paramétrable (100) disposé dans l'emballage extérieur (401), pour permettre un paramétrage de l'appareil d'alimentation en énergie paramétrable (100) disposé dans l'emballage extérieur (401).

11. Appareil d'alimentation en énergie paramétrable (100) comportant un emballage extérieur (401) selon l'une des revendications 1 à 9, dans lequel une paroi extérieure de l'emballage extérieur (401) comprend un indicateur de positionnement (403) indiquant une position physique de l'interface de communication sans fil (101) de l'appareil d'alimentation en énergie paramétrable (100) disposé dans l'emballage extérieur (401), pour permettre un paramétrage de l'appareil d'alimentation en énergie paramétrable (100) disposé dans l'emballage extérieur (401) .
